# EUROPÄISCHE PATENTSCHRIFT

(11) **EP 2 854 345 B1**
(45) Veröffentlichungstag und Bekanntmachung des Hinweises auf die Patenterteilung: **06.06.2018**
(21) Anmeldenummer: 13186627.9
(22) Anmeldetag: 30.09.2013
(51) Int. Cl.: H04L 12/42, H04L 12/46, H04L 12/701, H04L 12/753, H04L 12/40, H04L 12/437

(54) **Verfahren und Koppel-Kommunikationsgerät zur Nachrichtenübermittlung in einem redundant betreibbaren industriellen Kommunikationsnetz**
Method and coupling communication device for message delivery in a redundantly operable industrial communication network
Procédé et appareil de communication couplé pour la transmission de messages dans un réseau de communication industriel à fonctionnement redondant

(43) Veröffentlichungstag der Anmeldung: 01.04.2015
(73) Patentinhaber: Siemens Aktiengesellschaft, 80333 München (DE)
(72) Erfinder: Weichlein, Thomas, 91052 Erlangen (DE); Köpke, Andreas, 91052 Erlangen (DE); Strobel, Uwe, 90461 Nürnberg (DE)

(56) Entgegenhaltungen:
- US-B1- 7 602 706
- THE INSTITUTE OF ELECTRICAL AND ELECTRONIC ENGINEERS (IEEE): "PART 3: MEDIA ACCESS CONTROL (MAC) BRIDGES, ANSI/IEEE STD 802.1D, ISO/IEC 15802-3:1998", ANSI/IEEE STD 802.1D, XX, XX, 1. Januar 1998 (1998-01-01), Seite 1+70, XP002717984,
- ALESSIO GIORGETTI ET AL: "Performance Analysis of Media Redundancy Protocol (MRP)", IEEE TRANSACTIONS ON INDUSTRIAL INFORMATICS, IEEE SERVICE CENTER, NEW YORK, NY, US, Bd. 9, Nr. 1, 1. Februar 2013 (2013-02-01) , Seiten 218-227, XP011482872, ISSN: 1551-3203, DOI: 10.1109/TII.2012.2186584

## Beschreibung

In verteilten industriellen Automatisierungssystemen ist bei einer Erfassung, Auswertung und Übermittlung von Meß- und Steuerungsdaten ist sicherzustellen, daß vollständige und unveränderte Daten insbesondere bei zeitkritischen industriellen Produktionsprozessen in Echtzeit vorliegen. Absichtliche, unabsichtliche oder durch einen technischen Fehler bedingte Veränderungen sind zu vermeiden.

Üblicherweise umfaßt ein industrielles Automatisierungssystem eine Vielzahl von industriellen Automatisierungsgeräten, die über ein industrielles Kommunikationsnetz miteinander vernetzt sind und im Rahmen einer Fertigungs- oder Prozeßautomatisierung zur Steuerung oder Regelung von Anlagen, Maschinen bzw. Geräten dienen. Aufgrund zeitkritischer Rahmenbedingungen in technischen Systemen, die mittels industrieller Automatisierungsgeräte automatisiert sind, werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

Äußerst problematisch sind Unterbrechungen von Kommunikationsverbindungen zwischen Rechnereinheiten eines industriellen Automatisierungssystems oder industriellen Automatisierungsgeräten, da dies neben einem Informationsverlust beispielsweise zu einer unerwünschten oder unnötigen Wiederholung einer Übermittlung einer Dienstanforderung führen kann. Hierdurch wird eine zusätzliche Auslastung von Kommunikationsverbindungen des industriellen Automatisierungssystems verursacht, was zu weiteren Systemstörungen oder -fehlern führen kann. Darüber hinaus können nicht oder nicht vollständig übermittelte Nachrichten beispielsweise einen Übergang oder Verbleib eines industriellen Automatisierungssystems in einen sicheren Betriebszustand verhindern. Im ungünstigsten Fall kann es zu einem Ausfall einer kompletten Produktionsanlage und zu einem kostspieligen Produktionsstillstand kommen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie Media Redundancy Protocol, High-availability Seamless Redundancy, Parallel Redundancy Protocol oder (Rapid) Spanning Tree Protocol, für hochverfügbare, redundant betreibbare in industriellen Kommunikationsnetze entwickelt worden.

Media Redundancy Protocol (MRP) ist im Standard IEC 62439 definiert und ermöglicht eine Kompensation einzelner Verbindungsausfälle in Netzen mit einfacher Ringtopologie bei stoßbehafteter redundanter Übertragung von Nachrichten. Stoßbehaftete Medienredundanzverfahren lassen sich grundsätzlich mit relativ geringem Aufwand realisieren. Auch PROFINET (IEC 61158 Type 10) referenziert Media Redundancy Protocol als stoßbehaftetes Medienredundanzverfahren innerhalb eines Kommunikationsnetzes mit Ringtopologie.

In EP 1 067 787 B1 ist ein Ethernet-basiertes Kommunikationsnetz mit Redundanzeigenschaften beschrieben, bei dem ein an Linienenden des Kommunikationsnetzes angeschlossener Redundanz-Manager durch Test-Telegramme einen Zustand des Kommunikationsnetzes prüft. Bei einer Netzunterbrechung verbindet der Redundanzmanager die Linienenden und stellt auf diese Weise im Millisekundenbereich einen weiteren Netzbetrieb sicher.

Aus EP 1978 687 A2 ist ein Verfahren zur Konfiguration von Kommunikationsgeräten in einem Ring-Kommunikationsnetz bekannt, bei dem die Kommunikationsgeräte innerhalb einer logischen Linientopologie miteinander verbunden sind und entsprechend einem Redundanzprotokoll Nachrichten austauschen. Jedes Kommunikationsgerät weist zumindest zwei Schnittstellen zum Anschluß an die Linientopologie auf. Ausgehend von einem als Ring-Manager betriebenen Kommunikationsgerät wird eine Anwendung des Redundanzprotokolls durch die übrigen Kommunikationsgeräte mittels Konfigurationsdaten umfassenden Nachrichten konfiguriert. Dabei werden die Nachrichten vom Ring-Manager in die Linientopologie eingespeist.

In DE 10 2008 017 192 A1 ist ein Verfahren zum Aufbau eines Netzwerks beschrieben, das einen ersten Netzwerkteilnehmer mit einem Satz von Ports umfaßt. Diese Ports sind mit Ports von weiteren Netzwerkteilnehmern des Netzwerks verbunden. In einem ersten Verfahrensschritt werden die dem ersten Netzwerkteilnehmer zugeordneten Ports in einen ersten Betriebsmodus geschaltet. Im ersten Betriebsmodus können über die Ports Testtelegramme empfangen und versendet werden. Entsprechend einem weiteren Verfahrensschritt werden Testtelegramme über die dem ersten Netzwerkteilnehmer zugeordneten Ports gesendet. Darüber hinaus werden die dem ersten Netzwerkteilnehmer zugeordneten Ports in einen zweiten Betriebsmodus geschaltet, falls kein Testtelegramm der gesendeten Testtelegramme wieder vom ersten Netzwerkteilnehmer empfangen wird. Im zweiten Betriebsmodus werden Telegramme, die über einen der dem ersten Netzwerkteilnehmer zugeordneten Ports empfangen werden, über die verbleibenden Ports weitergeleitet. Auf diese Weise kann eine Bildung von Netzwerkschlaufen bei einem Vernetzen oder Erweitern komplexer Netzwerke vermieden werden.

Aus US 7 602 706 B1 ist ein Verfahren zur Übermittlung von Nachrichten entsprechend Rapid Spanning Tree Protocol (RSTP) bekannt, bei dem Nachrichten mit Topologieinformationen, die jeweils auf Basis niedrigster Pfadkosten zu einer Root Bridge ermittelt werden, sukzessive angepasst und entlang einer Baumtopologie propagiert werden. Dabei passt jedes Kommunikationsgerät seine Portzustände entsprechend empfangenen und auf diesen aufbauend errechneten Topologieinformationen an. RSTP ist in IEEE Standard 802.1D-2004 definiert.

In "Performance Analysis of Media Redundancy Protocol (MRP)", A. Giorgetti et al., IEEE Transactions on Industrial Informatics, IEEE Service Center, Bd. 9, Nr. 1, S. 218-227, ISSN 1551-3203, 01.02.2013 ist ein MRP-Kommunikationsnetz beschrieben, für das leistungsbeeinflussende System-Parameter ermittelt werden. Zu diesen Parametern zählen Offset Time und Physical Detection Time.

Der vorliegenden Erfindung liegt die Aufgabe zugrunde, ein Verfahren zur Nachrichtenübermittlung in einem redundant betreibbaren industriellen Kommunikationsnetz, das eine im wesentlichen rückwirkungsfreie, automatisch konfigurierte Kopplung von zwei Teilnetzen mit Ringtopologie ermöglicht, zu schaffen und ein zur Durchführung des Verfahrens geeignetes Koppel-Kommunikationsgerät anzugeben.

Diese Aufgabe wird erfindungsgemäß durch ein Verfahren mit den in Anspruch 1 angegebenen Merkmalen sowie durch ein Koppel-Kommunikationsgerät mit den in Anspruch 12 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur Nachrichtenübermittlung in einem redundant betreibbaren industriellen Kommunikationsnetz umfaßt das industrielle Kommunikationsnetz zumindest ein erstes und ein zweites Teilnetz, die jeweils innerhalb einer Ringtopologie miteinander verbundene Kommunikationsgeräte umfassen. Die Kommunikationsgeräte weisen jeweils zumindest ein Koppelelement sowie einen ersten und einen zweiten Ring-Anschluß auf. Der erste und der zweite Ring-Anschluß sind durch das Koppelelement schaltbar miteinander verbindbar. Das erstes und das zweite Teilnetz umfassen jeweils zumindest ein Kommunikationsgerät mit einer aktivierten Überwachungs- und Steuerungseinheit. Die Überwachungs- und Steuerungseinheit detektiert eine Unterbrechung innerhalb der jeweiligen Ringtopologie anhand durch das jeweilige Kommunikationsgerät versendeter und wieder empfangener erster Test-Nachrichten. Außerdem steuert die Überwachungs- und Steuerungseinheit eine Weiterleitung von Nachrichten mit Nutzdaten zwischen den Ring-Anschlüssen
des jeweiligen Kommunikationsgeräts in Abhängigkeit von einer detektierten Unterbrechung. Nachrichten innerhalb des ersten und des zweiten Teilnetzes werden entsprechend Media Redundancy Protocol (MRP) übermittelt, wobei die Überwachungs- und Steuerungseinheit insbesondere einen Redundanz-Manager realisiert. Darüber hinaus sind ein erstes Koppel-Kommunikationsgerät des ersten Teilnetzes und ein erstes Koppel-Kommunikationsgerät des zweiten Teilnetzes für eine Teilnetz-Kopplung miteinander verbunden, während ein zweites Koppel-Kommunikationsgerät des ersten Teilnetzes und ein zweites Koppel-Kommunikationsgerät des zweiten Teilnetzes für die Teilnetz-Kopplung miteinander verbunden sind. Die Koppel-Kommunikationsgeräte weisen zusätzlich einen Koppel-Anschluß auf.

Erfindungsgemäß wählen die Koppel-Kommunikationsgeräte anhand eines ihnen jeweils zugeordneten Prioritätskennwerts untereinander ein Koppel-Kommunikationsgerät aus, dessen Kopplungssteuerungseinheit aktiviert wird, während die anderen Koppel-Kommunikationsgeräte ihre Kopplungssteuerungseinheit deaktivieren. Das erste Koppel-Kommunikationsgerät des ersten Teilnetzes und das erste Koppel-Kommunikationsgerät des zweiten Teilnetzes tauschen untereinander zweite Test-Nachrichten zur Detektion einer Unterbrechung zwischen den beiden ersten Koppel-Kommunikationsgeräten aus, während das zweite Koppel-Kommunikationsgerät des ersten Teilnetzes und das zweite Koppel-Kommunikationsgerät des zweiten Teilnetzes untereinander dritte Test-Nachrichten zur Detektion einer Unterbrechung zwischen den beiden zweiten Koppel-Kommunikationsgeräten austauschen. Die aktivierte Kopplungssteuerungseinheit steuert eine Weiterleitung von Nachrichten mit Nutzdaten von bzw. an den Koppel-Anschluß des jeweiligen Koppel-Kommunikationsgeräts in Abhängigkeit von einer detektierten Unterbrechung zwischen den der Teilnetz-Kopplung zugeordneten Koppel-Kommunikationsgeräten. Auf diese Weise können nachteilige Rückwirkungen bei einer Kopplung der beiden Teilnetze, insbesondere Schleifenbildungen, vermieden werden. Eine Anpassung in den beiden Teilnetzen angewendeter Redundanzverfahren ist nicht erforderlich.

Erfindungsgemäß ermitteln die Kommunikationsgeräte des ersten bzw. des zweiten Teilnetzes auf Grundlage einer MAC-Adresse des jeweiligen für eine Aktivierung seiner Überwachungs- und Steuerungseinheit ausgewählten Kommunikationsgeräts einen Teilnetz-Identifikator des jeweiligen Teilnetzes. Dies ermöglicht eine sichere Identifizierung und Verarbeitung von den einzelnen Teilnetzen zugeordneten Nachrichten zur Kommunikationssteuerung. Darüber hinaus ermitteln die Koppel-Kommunikationsgeräte auf Grundlage der Teilnetz-Identifikatoren des ersten und des zweiten Teilnetzes einen Koppel-Identifikator für die Teilnetz-Kopplung. Dabei werden nur Koppel-Kommunikationsgeräte mit identischem zugeordneten Koppel-Identifikator in eine Auswahl des Koppel-Kommunikationsgeräts mit aktivierter Kopplungssteuerungseinheit einbezogen.

Das erste bzw. das zweite Teilnetz umfassen entsprechend einer Weiterbildung des erfindungsgemäßen Verfahrens jeweils mehrere Kommunikationsgeräte mit einer aktivierbaren Überwachungs- und Steuerungseinheit. Dabei wählen die Kommunikationsgeräte mit einer aktivierbaren Überwachungs- und Steuerungseinheit anhand eines ihnen jeweils zugeordneten Prioritätskennwerts untereinander für das jeweilige Teilnetz ein Kommunikationsgerät aus, dessen Überwachungs- und Steuerungseinheit aktiviert wird. Die anderen Kommunikationsgeräte innerhalb des jeweiligen Teilnetzes deaktivieren dagegen ihre Überwachungs- und Steuerungseinheit. Dies ermöglicht eine vereinfachte Konfiguration der Kommunikationsgeräte innerhalb des industriellen Kommunikationsnetzes.

Beispielsweise wird der jeweilige Teilnetz-Identifikator durch das jeweilige ausgewählte Kommunikationsgerät mit aktivierter Überwachungs- und Steuerungseinheit in die ersten Test-Nachrichten eingefügt. Außerdem kann der jeweilige Teilnetz-Identifikator durch die Kommunikationsgeräte auch in Nachrichten über Verbindungsstatusänderungen an einem ihrer Anschlüssebzw. über detektierte Topologieänderungen, wie MRP Topology Change Notifications oder MRP Link Change Notifications, eingefügt werden.

Anhand des Teilnetz-Identifikators kann das jeweilige ausgewählte Kommunikationsgerät mit aktivierter Überwachungs- und Steuerungseinheit beispielsweise zwischen seinen Ring-Anschlüssen eine Weiterleitung von seinem Teilnetz zugeordneten ersten Test-Nachrichten unterbinden. Darüber hinaus kann das jeweilige ausgewählte Kommunikationsgerät mit aktivierter Überwachungs- und Steuerungseinheit entsprechend einer weiteren Ausgestaltung des erfindungsgemäßen Verfahrens bei Empfang einer seinem Teilnetz zugeordneten Nachricht über Verbindungsstatusänderungen ein Zeitintervall für Aussenden von ersten Test-Nachrichten zumindest halbieren. Auf diese Weise kann eine Fehlererkennung und -behebung bei Ausfall einer Verbindung oder eines Anschlusses beschleunigt werden. Vorteilhafterweise verwirft das jeweilige ausgewählte Kommunikationsgerät mit aktivierter Überwachungs- und Steuerungseinheit einem fremden Teilnetz zugeordnete Nachrichten über Verbindungsstatusänderungen. Darüber hinaus kann der Teilnetz-Identifikator entsprechend einer weiteren Ausführungsform der vorliegenden Erfindung dafür genutzt werden, daß die Kommunikationsgeräte bei Empfang einer ihrem jeweiligen Teilnetz zugeordneten Nachricht über Topologieänderungen jeweils ihre lokale Forwarding Database selektiv und zuverlässig löschen.

Für eine zuverlässige Identifizierung und Verarbeitung kann der Koppel-Identifikator durch die Koppel-Kommunikationsgeräte in die zweiten und die dritten Test-Nachrichten eingefügt werden. Auf dieser Grundlage werten beispielsweise die beiden ersten Koppel-Kommunikationsgeräte zur Detektion einer Unterbrechung zwischen den beiden ersten Koppel-Kommunikationsgeräten nur die zweiten Test-Nachrichten, während beiden zweiten Koppel-Kommunikationsgeräte zur Detektion einer Unterbrechung zwischen den beiden zweiten Koppel-Kommunikationsgeräten nur die dritten Test-Nachrichten auswerten. Damit können diese Unterbrechungen zuverlässig erkannt und zugeordnet werden.

Vorzugsweise beteiligen sich die Koppel-Kommunikationsgeräte jeweils bei Empfang von einem fremden Teilnetz zugeordneten ersten Test-Nachrichten an ihrem jeweiligen Koppel-Anschluß an der Auswahl des Koppel-Kommunikationsgeräts mit aktivierter Kopplungssteuerungseinheit.

Das erfindungsgemäße Koppel-Kommunikationsgerät ist für eine Durchführung eines Verfahrens entsprechend obigen Ausführungen zur Nachrichtenübermittlung in einem redundant betreibbaren industriellen Kommunikationsnetz geeignet, das zumindest ein erstes und ein zweites Teilnetz umfaßt, die jeweils innerhalb einer Ringtopologie miteinander verbundene Kommunikationsgeräte umfassen. Dabei weist das Koppel-Kommunikationsgerät zumindest ein Koppelelement sowie einen ersten und einen zweiten Ring-Anschluß und einen Koppel-Anschluß auf, die durch das Koppelelement schaltbar miteinander verbindbar sind. Beispielsweise kann das Koppel-Kommunikationsgerät ein Switch oder eine Bridge umfassen.

Erfindungsgemäß ist das Koppel-Kommunikationsgerät dafür ausgestaltet und eingerichtet, Nachrichten entsprechend Media Redundancy Protocol zu übermitteln und mit weiteren Koppel-Kommunikationsgeräten anhand eines ihnen jeweils zugeordneten Prioritätskennwerts untereinander ein Koppel-Kommunikationsgerät auszuwählen, dessen Kopplungssteuerungseinheit aktiviert wird, während die anderen Koppel-Kommunikationsgeräte ihre Kopplungssteuerungseinheit deaktivieren. Ferner ist das Koppel-Kommunikationsgerät dafür ausgestaltet und eingerichtet ist, mit einem zugeordneten Koppel-Kommunikationsgerät eines fremden Teilnetzes Test-Nachrichten zur Detektion einer Unterbrechung zwischen beiden Koppel-Kommunikationsgeräten auszutauschen. Darüber hinaus ist das erfindungsgemäße Koppel-Kommunikationsgerät dafür ausgestaltet und eingerichtet, bei aktivierter Kopplungssteuerungseinheit eine Weiterleitung von Nachrichten mit Nutzdaten von bzw. an den Koppel-Anschluß in Abhängigkeit von einer detektierten Unterbrechung zwischen einer Teilnetz-Kopplung zugeordneten Koppel-Kommunikationsgeräten zu steuern. Dies ermöglicht eine rückwirkungsfreie Kopplung der beiden Teilnetze.

Außerdem ist das erfindungsgemäße Koppel-Kommunikationsgerät dafür ausgestaltet und eingerichtet, auf Grundlage einer MAC-Adresse eines jeweiligen für eine Aktivierung seiner Überwachungs- und Steuerungseinheit ausgewählten Kommunikationsgeräts einen Teilnetz-Identifikator seines Teilnetzes zu ermitteln und auf Grundlage der Teilnetz-Identifikatoren seines Teilnetzes und eines fremden Teilnetzes einen Koppel-Identifikator für eine Teilnetz-Kopplung ermitteln. Dabei werden nur Koppel-Kommunikationsgeräte mit identischem zugeordneten Koppel-Identifikator in eine Auswahl des Koppel-Kommunikationsgeräts mit aktivierter Kopplungssteuerungseinheit einbezogen werden.

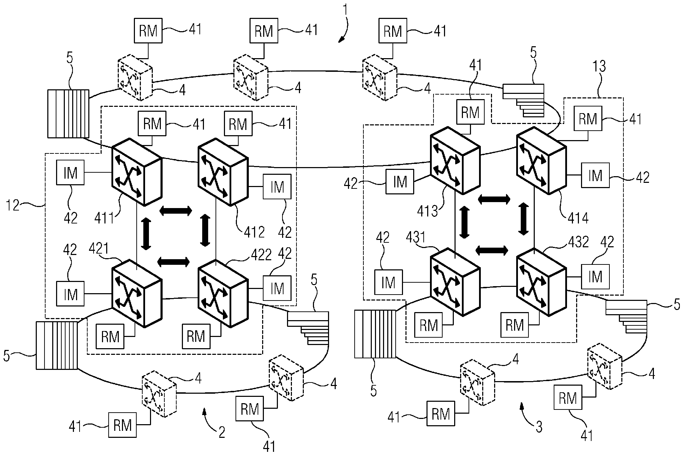

Die vorliegende Erfindung wird nachfolgend an einem Ausführungsbeispiel anhand der Zeichnung näher erläutert. Es zeigt die
- Figur: eine schematische Darstellung eines redundant betreibbaren industriellen Kommunikationsnetzes, das mehrere miteinander gekoppelte Teilnetze mit Ringtopologie umfaßt.

Das in der Figur dargestellte industrielle Kommunikationsnetz umfaßt im vorliegenden Ausführungsbeispiel drei Teilnetze 1-3 umfaßt, die jeweils innerhalb einer Ringtopologie miteinander verbundene Kommunikationsgeräte 4, 5, 411-414, 421-422, 431-432 umfassen. Die Kommunikationsgeräte, wie Switches 4, 411-414, 421-422, 431-432 oder Automatisierungsgeräte 5 mit Kommunikationsprozessor, weisen jeweils zumindest ein Koppelelement sowie einen ersten und einen zweiten Ring-Anschluß aufweisen, die durch das Koppelelement schaltbar miteinander verbindbar sind. Innerhalb der drei Teilnetze 1-3 werden Nachrichten entsprechend Media Redundancy Protocol übermittelt.

Die Switches 4, 411-414, 421-422, 431-432 umfassen im vorliegenden Ausführungsbeispiel jeweils eine nachfolgend als Redundanz-Manager bezeichnete aktivierbare Überwachungs- und Steuerungseinheit 41, die in einem aktivierten Zustand eine Unterbrechung innerhalb der jeweiligen Ringtopologie anhand durch den jeweiligen Switch 4, 411-414, 421-422, 431-432 versendeter und wieder empfangener Ring-Redundanz-Test-Nachrichten detektiert. Außerdem steuert der Redundanz-Manager 41 im aktivierten Zustand eine Weiterleitung von Nachrichten mit Nutzdaten zwischen den Ring-Anschlüssen des jeweiligen Switchs 4, 411-414, 421-422, 431-432 in Abhängigkeit von einer detektierten Unterbrechung. Auf diese Weise werden Schleifenbildungen bzw. kreisende Nachrichten innerhalb des jeweiligen Teilnetzes 1-3 verhindert. Dabei weisen die Teilnetze 1-3 auf logischer Ebene eine Linientopologie auf.

Die Switches 4, 411-414, 421-422, 431-432 mit aktivierbarem Redundanz-Manager 41 wählen in einem Manager-Voting-Verfahren innerhalb des jeweiligen Teilnetzes 1-3 untereinander anhand eines ihnen jeweils zugeordneten Prioritätskennwerts einen Switch 4, 411-414, 421-422, 431-432 aus, dessen Redundanz-Manager 41 aktiviert wird. Die anderen Switches 4, 411-414, 421-422, 431-432 innerhalb des jeweiligen Teilnetzes deaktivieren dagegen ihren Redundanz-Manager 41. Darüber hinaus ermitteln die Kommunikationsgeräte 4, 5 des drei Teilnetze 1-3 auf Grundlage einer MAC-Adresse des Switchs 4, der entsprechend des Manager-Voting-Verfahrens seinen Redundanz-Manager 41 aktiviert, einen nachfolgend als DomainUUID bezeichneten Teilnetz-Identifikator des jeweiligen Teilnetzes. Die DomainUUID wird durch den jeweiligen Switch 4, 411-414, 421-422, 431-432 mit aktiviertem Redundanz-Manager 41 in die Ring-Redundanz-Test-Nachrichten eingefügt. Außerdem wird die DomainUUID durch die Kommunikationsgeräte 4, 5 in Nachrichten über Verbindungsstatusänderungen an einem ihrer Anschlüsse und über detektierte Topologieänderungen eingefügt, nachfolgend als Link Change Notifications bzw. als Topology Change Notifications bezeichnet.

Anhand der DomainUUID in den Ring-Redundanz-Test-Nachrichten kann der jeweilige Switch 4, 411-414, 421-422, 431-432 mit aktiviertem Redundanz-Manager 41 zwischen seinen Ring-Anschlüssen eine Weiterleitung von seinem Teilnetz zugeordneten Ring-Redundanz-Test-Nachrichten unterbinden, so daß diese nicht dauerhaft innerhalb des jeweiligen Teilnetzes 1-3 kreisen. Empfängt der jeweilige Switch 4, 411-414, 421-422, 431-432 mit aktiviertem Redundanz-Manager 41 eine anhand der DomainUUID seinem Teilnetz 1-3 zugeordnete Link Change Notification, reduziert er beispielsweise durch Halbieren ein Zeitintervall für Aussenden von Ring-Redundanz-Test-Nachrichten. In entsprechender Weise werden fremden Teilnetzen zugeordnete Link Change Notifications verworfen. Des weiteren können die Kommunikationsgeräte 4, 5 anhand der DomainUUID bei Empfang einer ihrem jeweiligen Teilnetz 1-3 zugeordneten Topology Change Notification jeweils ihre lokale Forwarding Database löschen, um auf Topologieänderungen zu reagieren.

Im vorliegenden Ausführungsbeispiel ist ein erstes Teilnetz 1 über eine erste 12 bzw. zweite Teilnetz-Kopplung 13 mit einem zweiten 2 und dritten Teilnetz 3 verbunden. Zwischen dem zweiten 2 und dritten Teilnetz 3 besteht dagegen im vorliegenden Ausführungsbeispiel keine Teilnetz-Kopplung. Bei der ersten Teilnetz-Kopplung 12 sind ein erster Koppel-Switch 411 des ersten Teilnetzes 1 und ein erster Koppel-Switch 421 des zweiten Teilnetzes 2 miteinander verbunden, während ein zweiter Koppel-Switch 412 des ersten Teilnetzes 1 und ein zweiter Koppel-Switch 422 des zweiten Teilnetzes 2 miteinander verbunden sind. In entsprechender Weise sind bei der zweiten Teilnetz-Kopplung 13 ein dritter Koppel-Switch 413 des ersten Teilnetzes 1 und ein erster Koppel-Switch 431 des dritten Teilnetzes 3 miteinander verbunden, während ein vierter Koppel-Switch 414 des ersten Teilnetzes 1 und ein zweiter Koppel-Switch 432 des dritten Teilnetzes 3 miteinander verbunden sind. Die Koppel-Switches 411-414, 421-422, 431-432 weisen zusätzlich einen Koppel-Anschluß sowie eine nachfolgend als Interconnection-Manager bezeichnete Kopplungssteuerungseinheit 42 auf.

Anhand eines ihnen jeweils zugeordneten Prioritätskennwerts wählen die Koppel-Switches 411-414, 421-422, 431-432 für jede Teilnetz-Kopplung untereinander einen Koppel-Switch aus, dessen Interconnection-Manager 42 aktiviert wird. Die anderen Koppel-Switches deaktivieren dagegen ihren Interconnection-Manager 42. Des weiteren tauschen der erste Koppel-Switch 411 des ersten Teilnetzes 1 und der erste Koppel-Switch 421 des zweiten Teilnetzes 2 untereinander Interconnection-Test-Nachrichten zur Detektion einer Unterbrechung zwischen den beiden ersten Koppel-Swiches 411, 421 aus. Ebenso tauschen der zweite Koppel-Switch 412 des ersten Teilnetzes 1 und der zweite Koppel-Switch 422 des zweiten Teilnetzes 2 untereinander Interconnection-Test-Nachrichten zur Detektion einer Unterbrechung zwischen den beiden zweiten Koppel-Switches 412, 422 aus.

In analoger Weise tauschen bei der zweiten Teilnetz-Kopplung 13 der dritte Koppel-Switch 414 des ersten Teilnetzes 1 und der erste Koppel-Switch 431 des dritten Teilnetzes 3 untereinander Interconnection-Test-Nachrichten zur Detektion einer Unterbrechung aus. Auch der vierte Koppel-Switch 414 des ersten Teilnetzes 1 und der zweite Koppel-Switch 432 des dritten Teilnetzes 3 tauschen untereinander Interconnection-Test-Nachrichten zur Detektion einer Unterbrechung aus. Der jeweils aktivierte Interconnection-Manager 42 steuert eine Weiterleitung von Nachrichten mit Nutzdaten von bzw. an den Koppel-Anschluß des jeweiligen Koppel-Switchs 411-414, 421-422, 431-432 in Abhängigkeit von einer detektierten Unterbrechung zwischen den einer Teilnetz-Kopplung 12, 12 zugeordneten Koppel-Switches.

Darüber hinaus ermitteln die Koppel-Switches 411-414, 421-422, 431-432 auf Grundlage der DomainUUIDs der jeweiligen Teilnetze 1-3 einen nachfolgend als InterconnectionID bezeichneten Koppel-Identifikator für die erste 12 bzw. zweite Teilnetz-Kopplung 13. Diese InterconnectionID wird in die Interconnection-Test-Nachrichten eingefügt und beispielsweise dafür verwendet, daß nur Koppel-Switches 411-414, 421-422, 431-432 mit identischer zugeordneter InterconnectionID in eine Auswahl des Koppel-Switchs mit aktivierter Kopplungssteuerungseinheit einbezogen werden bzw. an einem entsprechenden Voting-Verfahren teilnehmen. Außerdem kann die InterconnectionID dafür genutzt werden, gezielt nur die Interconnection-Test-Nachrichten auszuwerten, welche die Teilnetz-Kopplung 12, 13 betreffen, welcher der jeweilige Koppel-Switch 411-414, 421-422, 431-432 zugeordnet ist.

Die Koppel-Switches 411-414, 421-422, 431-432 werden mit aktiviertem Interconnection-Manager 42 und einer Standard-InterconnectionID initialisiert, die durch eine im Rahmen des o.g. Voting-Verfahrens ermittelte InterconnectionID ersetzt werden kann. Bei Empfang von einem fremden Teilnetz 1-3 zugeordneten Test-Nachrichten an ihrem Koppel-Anschluß beteiligen sich die Koppel-Switches 411-414, 421-422, 431-432 jeweils an der Auswahl des Koppel-Switchs, dessen Interconnection-Manager 42 zu aktivieren ist. Damit können beispielsweise Umsteckfehler vermieden werden, etwa wenn der zweite Koppel-Switch 412 des ersten Teilnetzes 1 mit dem ersten Koppel-Switch 431 des dritten Teilnetzes 3 verbunden wird, oder wenn der dritte Koppel-Switch 413 des ersten Teilnetzes 1 mit dem zweiten Koppel-Switch 422 des zweiten Teilnetzes 2 verbunden wird.

Durch eine automatische Konfiguration einer eindeutigen InterconnectionID können grundsätzlich beliebig viele gekoppelte Ring-Netze schnell und automatisch hochgefahren werden.

## Patentansprüche

1. Verfahren zur Nachrichtenübermittlung in einem redundant betreibbaren industriellen Kommunikationsnetz, bei dem
- das industrielle Kommunikationsnetz zumindest ein erstes (1) und ein zweites Teilnetz (2) umfaßt, die jeweils innerhalb einer Ringtopologie miteinander verbundene Kommunikationsgeräte (4-5; 411-412; 421-422) umfassen, die jeweils zumindest ein Koppelelement sowie einen ersten und einen zweiten Ring-Anschluß aufweisen, wobei der erste und der zweite Ring-Anschluß durch das Koppelelement schaltbar miteinander verbindbar sind,
- Nachrichten innerhalb des ersten und des zweiten Teilnetzes entsprechend Media Redundancy Protocol übermittelt werden,
- das erstes und das zweite Teilnetz jeweils zumindest ein Kommunikationsgerät mit einer aktivierten Überwachungs- und Steuerungseinheit (41) umfassen, die eine Unterbrechung innerhalb der jeweiligen Ringtopologie anhand durch das jeweilige Kommunikationsgerät versendeter und wieder empfangener erster Test-Nachrichten detektiert sowie eine Weiterleitung von Nachrichten mit Nutzdaten zwischen den Ring-Anschlüssen des jeweiligen Kommunikationsgeräts in Abhängigkeit von einer detektierten Unterbrechung steuert,
- ein erstes Koppel-Kommunikationsgerät (411) des ersten Teilnetzes und ein erstes Koppel-Kommunikationsgerät (421) des zweiten Teilnetzes für eine Teilnetz-Kopplung (12) miteinander verbunden sind, während ein zweites Koppel-Kommunikationsgerät (412) des ersten Teilnetzes und ein zweites Koppel-Kommunikationsgerät des zweiten Teilnetzes (422) für die Teilnetz-Kopplung miteinander verbunden sind, wobei die Koppel-Kommunikationsgeräte zusätzlich einen Koppel-Anschluß aufweisen,
**dadurch gekennzeichnet, daß**
- die Kommunikationsgeräte des ersten und des zweiten Teilnetzes auf Grundlage einer MAC-Adresse des jeweiligen für eine Aktivierung seiner Überwachungs- und Steuerungseinheit (41) ausgewählten Kommunikationsgeräts einen Teilnetz-Identifikator des jeweiligen Teilnetzes ermitteln,
- die Koppel-Kommunikationsgeräte (411-412; 421-422) auf Grundlage der Teilnetz-Identifikatoren des ersten und des zweiten Teilnetzes einen Koppel-Identifikator für die Teilnetz-Kopplung (12) ermitteln,
- die Koppel-Kommunikationsgeräte anhand eines ihnen jeweils zugeordneten Prioritätskennwerts untereinander ein Koppel-Kommunikationsgerät auswählen, dessen Kopplungssteuerungseinheit (42) aktiviert wird, während die anderen Koppel-Kommunikationsgeräte ihre Kopplungssteuerungseinheit (42) deaktivieren,
- nur Koppel-Kommunikationsgeräte mit identischem zugeordneten Koppel-Identifikator in eine Auswahl des Koppel-Kommunikationsgeräts mit aktivierter Kopplungssteuerungseinheit einbezogen werden,
- das erste Koppel-Kommunikationsgerät (411) des ersten Teilnetzes und das erste Koppel-Kommunikationsgerät (421) des zweiten Teilnetzes untereinander zweite Test-Nachrichten zur Detektion einer Unterbrechung zwischen den beiden ersten Koppel-Kommunikationsgeräten austauschen, während das zweite Koppel-Kommunikationsgerät (412) des ersten Teilnetzes und das zweite Koppel-Kommunikationsgerät (422) des zweiten Teilnetzes untereinander dritte Test-Nachrichten zur Detektion einer Unterbrechung zwischen den beiden zweiten Koppel-Kommunikationsgeräten austauschen,
- die aktivierte Kopplungssteuerungseinheit (42) eine Weiterleitung von Nachrichten mit Nutzdaten von und/oder an den Koppel-Anschluß des jeweiligen Koppel-Kommunikationsgeräts in Abhängigkeit von einer detektierten Unterbrechung zwischen den der Teilnetz-Kopplung zugeordneten Koppel-Kommunikationsgeräten steuert.

2. Verfahren nach Anspruch 1,
bei dem das erste und/oder das zweite Teilnetz jeweils mehrere Kommunikationsgeräte mit einer aktivierbaren Überwachungs- und Steuerungseinheit umfassen, und bei dem die Kommunikationsgeräte mit einer aktivierbaren Überwachungs- und Steuerungseinheit anhand eines ihnen jeweils zugeordneten Prioritätskennwerts untereinander für das jeweilige Teilnetz ein Kommunikationsgerät auswählen, dessen Überwachungs- und Steuerungseinheit aktiviert wird, während die anderen Kommunikationsgeräte innerhalb des jeweiligen Teilnetzes ihre Überwachungs- und Steuerungseinheit deaktivieren.

3. Verfahren nach einem der Ansprüche 1 oder 2,
bei dem der jeweilige Teilnetz-Identifikator durch das jeweilige ausgewählte Kommunikationsgerät mit aktivierter Überwachungs- und Steuerungseinheit in die ersten Test-Nachrichten eingefügt wird.

4. Verfahren nach einem der Ansprüche 1 bis 3,
bei dem der jeweilige Teilnetz-Identifikator durch die Kommunikationsgeräte in Nachrichten über Verbindungsstatusänderungen an einem ihrer Anschlüsse und/oder über detektierte Topologieänderungen eingefügt wird.

5. Verfahren nach einem der Ansprüche 1 bis 4,
bei dem das jeweilige ausgewählte Kommunikationsgerät mit aktivierter Überwachungs- und Steuerungseinheit zwischen seinen Ring-Anschlüssen eine Weiterleitung von seinem Teilnetz zugeordneten ersten Test-Nachrichten unterbindet.

6. Verfahren nach einem der Ansprüche 1 bis 5,
bei dem das jeweilige ausgewählte Kommunikationsgerät mit aktivierter Überwachungs- und Steuerungseinheit bei Empfang einer seinem Teilnetz zugeordneten Nachricht über Verbindungsstatusänderungen ein Zeitintervall für Aussenden von ersten Test-Nachrichten zumindest halbiert.

7. Verfahren nach Anspruch 6,
bei dem das jeweilige ausgewählte Kommunikationsgerät mit aktivierter Überwachungs- und Steuerungseinheit einem fremden Teilnetz zugeordnete Nachrichten über Verbindungsstatusänderungen verwirft.

8. Verfahren nach einem der Ansprüche 1 bis 7,
bei dem die Kommunikationsgeräte bei Empfang einer ihrem jeweiligen Teilnetz zugeordneten Nachricht über Topologieänderungen jeweils ihre lokale Forwarding Database löschen.

9. Verfahren nach einem der Ansprüche 1 bis 8,
bei dem sich die Koppel-Kommunikationsgeräte jeweils bei Empfang von einem fremden Teilnetz zugeordneten ersten Test-Nachrichten an ihrem jeweiligen Koppel-Anschluß an der Auswahl des Koppel-Kommunikationsgeräts mit aktivierter Kopplungssteuerungseinheit beteiligen.

10. Verfahren nach einem der Ansprüche 1 bis 9,
bei dem der Koppel-Identifikator durch die Koppel-Kommunikationsgeräte in die zweiten und die dritten Test-Nachrichten eingefügt wird.

11. Verfahren nach Anspruch 10,
bei dem die beiden ersten Koppel-Kommunikationsgeräte zur Detektion einer Unterbrechung zwischen den beiden ersten Koppel-Kommunikationsgeräten nur die zweiten Test-Nachrichten auswerten, während beiden zweiten Koppel-Kommunikationsgeräte zur Detektion einer Unterbrechung zwischen den beiden zweiten Koppel-Kommunikationsgeräten nur die dritten Test-Nachrichten auswerten.

12. Koppel-Kommunikationsgerät (411, 412, 421, 422) zur Durchführung eines Verfahrens zur Nachrichtenübermittlung in einem redundant betreibbaren industriellen Kommunikationsnetz, das zumindest ein erstes und ein zweites Teilnetz umfaßt, die jeweils innerhalb einer Ringtopologie miteinander verbundene Kommunikationsgeräte umfassen, nach einem der Ansprüche 1 bis 11, bei dem
- das Koppel-Kommunikationsgerät dafür ausgestaltet und eingerichtet ist, Nachrichten entsprechend Media Redundancy Protocol zu übermitteln,
- das Koppel-Kommunikationsgerät zumindest ein Koppelelement sowie einen ersten und einen zweiten Ring-Anschluß und einen Koppel-Anschluß aufweist, wobei der erste und der zweite Ring-Anschluß und der Koppel-Anschluß durch das Koppelelement schaltbar miteinander verbindbar sind,
**dadurch gekennzeichnet, daß**
- das Koppel-Kommunikationsgerät dafür ausgestaltet und eingerichtet ist, auf Grundlage einer MAC-Adresse eines jeweiligen für eine Aktivierung seiner Überwachungs- und Steuerungseinheit ausgewählten Kommunikationsgeräts einen Teilnetz-Identifikator seines Teilnetzes zu ermitteln,
- das Koppel-Kommunikationsgerät dafür ausgestaltet und eingerichtet ist, auf Grundlage der Teilnetz-Identifikatoren seines Teilnetzes und eines fremden Teilnetzes einen Koppel-Identifikator für eine Teilnetz-Kopplung ermitteln,
- das Koppel-Kommunikationsgerät dafür ausgestaltet und eingerichtet ist, mit weiteren Koppel-Kommunikationsgeräten anhand eines ihnen jeweils zugeordneten Prioritätskennwerts untereinander ein Koppel-Kommunikationsgerät auszuwählen, dessen Kopplungssteuerungseinheit aktiviert wird, während die anderen Koppel-Kommunikationsgeräte ihre Kopplungssteuerungseinheit deaktivieren, wobei nur Koppel-Kommunikationsgeräte mit identischem zugeordneten Koppel-Identifikator in eine Auswahl des Koppel-Kommunikationsgeräts mit aktivierter Kopplungssteuerungseinheit einbezogen werden,
- das Koppel-Kommunikationsgerät dafür ausgestaltet und eingerichtet ist, mit einem zugeordneten Koppel-Kommunikationsgerät eines fremden Teilnetzes Test-Nachrichten zur Detektion einer Unterbrechung zwischen beiden Koppel-Kommunikationsgeräten auszutauschen,
- das Koppel-Kommunikationsgerät dafür ausgestaltet und eingerichtet ist, bei aktivierter Kopplungssteuerungseinheit eine Weiterleitung von Nachrichten mit Nutzdaten von und/oder an den Koppel-Anschluß in Abhängigkeit von einer detektierten Unterbrechung zwischen einer Teilnetz-Kopplung zugeordneten Koppel-Kommunikationsgeräten zu steuern.

13. Koppel-Kommunikationsgerät nach Anspruch 12,
bei dem das Koppel-Kommunikationsgerät ein Switch oder eine Bridge umfaßt.

## Claims

1. Method for transmitting messages in a redundantly operable industrial communication network, in which
- the industrial communication network comprises at least a first subnetwork (1) and a second subnetwork (2) each comprising communication devices (4-5; 411-412; 421-422) which are connected to one another inside a ring topology and each have at least a coupling element and a first ring connection and a second ring connection, the first and second ring connections being able to be switchably connected to one another by means of the coupling element,
- messages are transmitted inside the first and second subnetworks according to the Media Redundancy Protocol,
- the first and second subnetworks each comprise at least one communication device having an activated monitoring and control unit (41) which detects an interruption inside the respective ring topology on the basis of first test messages transmitted and received again by the respective communication device and controls forwarding of messages containing useful data between the ring connections of the respective communication device on the basis of a detected interruption,
- a first coupling communication device (411) of the first subnetwork and a first coupling communication device (421) of the second subnetwork are connected to one another for subnetwork coupling (12), whereas a second coupling communication device (412) of the first subnetwork and a second coupling communication device of the second subnetwork (422) are connected to one another for subnetwork coupling, the coupling communication devices additionally having a coupling connection,
**characterized in that**
- the communication devices of the first and second subnetworks determine a subnetwork identifier of the respective subnetwork on the basis of a MAC address of the respective communication device selected for activation of its monitoring and control unit (41),
- the coupling communication devices (411-412; 421-422) determine a coupling identifier for the subnetwork coupling (12) on the basis of the subnetwork identifiers of the first and second subnetworks,
- the coupling communication devices select a coupling communication device whose coupling control unit (42) is activated on the basis of a priority characteristic value respectively assigned to them, whereas the other coupling communication devices deactivate their coupling control unit (42),
- only coupling communication devices having an identical assigned coupling identifier are included in a selection of the coupling control device with an activated coupling control unit,
- the first coupling communication device (411) of the first subnetwork and the first coupling communication device (421) of the second subnetwork interchange second test messages for the purpose of detecting an interruption between the two first coupling communication devices, whereas the second coupling communication device (412) of the first subnetwork and the second coupling communication device (422) of the second subnetwork interchange third test messages for the purpose of detecting an interruption between the two second coupling communication devices,
- the activated coupling control unit (42) controls forwarding of messages containing useful data from and/or to the coupling connection of the respective coupling communication device on the basis of a detected interruption between the coupling communication devices assigned to the subnetwork coupling.

2. Method according to Claim 1,
in which the first subnetwork and/or the second subnetwork each comprise(s) a plurality of communication devices having an activatable monitoring and control unit, and in which the communication devices having an activatable monitoring and control unit select a communication device whose monitoring and control unit is activated on the basis of a priority characteristic value respectively assigned to them, whereas the other communication devices inside the respective subnetwork deactivate their monitoring and control unit.

3. Method according to either of Claims 1 and 2,
in which the respective subnetwork identifier is inserted into the first test messages by the respective selected communication device having an activated monitoring and control unit.

4. Method according to one of Claims 1 to 3,
in which the respective subnetwork identifier is inserted by the communication devices into messages relating to connection status changes at one of their connections and/or relating to detected topology changes.

5. Method according to one of Claims 1 to 4,
in which the respective selected communication device having an activated monitoring and control unit prevents forwarding of first test messages assigned to its subnetwork between its ring connections.

6. Method according to one of Claims 1 to 5,
in which the respective selected communication device having an activated monitoring and control unit at least halves an interval of time for emitting first test messages upon receiving a message which is assigned to its subnetwork and relates to connection status changes.

7. Method according to Claim 6,
in which the respective selected communication device having an activated monitoring and control unit rejects messages which are assigned to an external subnetwork and relate to connection status changes.

8. Method according to one of Claims 1 to 7,
in which the communication devices each delete their local forwarding database upon receiving a message which is assigned to their respective subnetwork and relates to topology changes.

9. Method according to one of Claims 1 to 8,
in which the coupling communication devices are each involved in the selection of the coupling communication device having an activated coupling control unit upon receiving first test messages which are assigned to an external subnetwork at their respective coupling connection.

10. Method according to one of Claims 1 to 9,
in which the coupling identifier is inserted into the second and third test messages by the coupling communication devices.

11. Method according to Claim 10,
in which the two first coupling communication devices evaluate only the second test messages for the purpose of detecting an interruption between the two first coupling communication devices, whereas both second coupling communication devices evaluate only the third test messages for the purpose of detecting an interruption between the two second coupling communication devices.

12. Coupling communication device (411, 412, 421, 422) for carrying out a method for transmitting messages in a redundantly operable industrial communication network which comprises at least a first subnetwork and a second subnetwork each comprising communication devices which are connected to one another inside a ring topology according to one of Claims 1 to 11, in which
- the coupling communication device is configured and set up to transmit messages according to the Media Redundancy Protocol,
- the coupling communication device has at least a coupling element and a first ring connection and a second ring connection and a coupling connection, the first and second ring connections and the coupling connection being able to be switchably connected to one another by means of the coupling element,
**characterized in that**
- the coupling communication device is configured and set up to determine a subnetwork identifier of its subnetwork on the basis of a MAC address of a respective communication device selected for activation of its monitoring and control unit,
- the coupling communication device is configured and set up to determine a coupling identifier for subnetwork coupling on the basis of the subnetwork identifiers of its subnetwork and an external subnetwork,
- the coupling communication device is configured and set up to select, with further coupling communication devices, a coupling communication device whose coupling control unit is activated on the basis of a priority characteristic value respectively assigned to them, whereas the other coupling communication devices deactivate their coupling control unit, only coupling communication devices having an identical assigned coupling identifier being included in a selection of the coupling communication device with an activated coupling control unit,
- the coupling communication device is configured and set up to interchange test messages with an assigned coupling communication device of an external subnetwork for the purpose of detecting an interruption between both coupling communication devices,
- the coupling communication device is configured and set up, when the coupling control unit is activated, to control forwarding of messages containing useful data from and/or to the coupling connection on the basis of a detected interruption between coupling communication devices assigned to subnetwork coupling.

13. Coupling communication device according to Claim 12,
in which the coupling communication device comprises a switch or a bridge.

## Revendications

1. Procédé de transmission de messages dans un réseau de communication industriel pouvant fonctionner de manière redondante, dans lequel
- le réseau de communication industriel comprend au moins un premier (1) et un deuxième sous-réseaux (2), qui comprennent chacun des appareils (4-5; 411-412; 421-422) de communication reliés entre eux dans une topologie en anneau, qui ont chacun au moins un élément de couplage ainsi qu'un premier et un deuxième accès d'anneau, le premier et le deuxième accès d'anneau pouvant être reliés entre eux, de manière commutable, par l'élément de couplage,
- on transmet des messages dans le premier et le deuxième sous-réseaux, conformément à média redundancy protocol,
- le premier et le deuxième sous-réseaux comprennent chacun au moins un appareil de communication, ayant une unité (41) activée de contrôle et de commande, qui détecte une interruption dans la topologie en anneau respective, à l'aide de premiers messages de test envoyés par l'appareil de communication respectif et reçus à nouveau, ainsi que commande en fonction de la détection d'une interruption, un acheminement de messages ayant des données utiles entre les accès d'anneau de l'appareil de communication respectif,
- un premier appareil (411) de communication de couplage du premier sous-réseau et un premier appareil (421) de communication de couplage du deuxième sous-réseau sont reliés entre eux pour un couplage (12) de sous-réseaux, tandis qu'un deuxième appareil (412) de communication de couplage du premier sous-réseau et un deuxième appareil de communication de couplage du deuxième sous-réseau (422) sont reliés entre eux pour un couplage de sous-réseaux, les appareils de communication de couplage ayant, en outre, un accès de couplage,
**caractérisé en ce que**
- les appareils de communication du premier et du deuxième sous-réseaux déterminent, sur la base d'une adresse MAC de l'appareil de communication respectif choisi pour une activation de son unité (41) de contrôle et de commande, un identificateur de sous-réseau du sous-réseau respectif,
- les appareils (411-412; 421-422) de communication de couplage déterminent, sur la base des identificateurs de sous-réseau du premier et du deuxième sous-réseaux, une identification de couplage pour le couplage (12) de sous-réseaux,
- les appareils de communication de couplage choisissent, à l'aide d'une valeur caractéristique de priorité, qui leur est associée respectivement, entre eux, un appareil de communication de couplage, dont l'unité (42) de commande de couplage est activée, tandis que les autres appareils de communication de couplage désactivent leur unité (41) de commande de couplage,
- seuls des appareils de communication de couplage, à identificateur de couplage associé identique, sont inclus dans un choix de l'appareil de communication de couplage à unité de commande de couplage activée,
- le premier appareil (411) de communication de couplage du premier sous-réseau et le premier appareil (421) de communication de couplage du deuxième sous-réseau échangent entre eux des deuxièmes messages de test pour détecter une interruption entre les deux premiers appareils de communication de couplage, tandis que le deuxième appareil (412) de communication de couplage du premier sous-réseau et le deuxième appareil (422) de communication de couplage du deuxième sous-réseau échangent entre eux des troisièmes messages de test pour détecter une interruption entre les deux deuxièmes appareils de communication de couplage,
- l'unité (42) de commande de couplage activée commande un acheminement de messages ayant des données utiles, à partir et/ou vers l'accès de couplage de l'appareil de communication de couplage respectif, en fonction de la détection d'une interruption entre les appareils de communication de couplage associés au couplage de sous-réseaux.

2. Procédé suivant la revendication 1,
dans lequel le premier et/ou le deuxième sous-réseaux comprennent chacun plusieurs appareils de communication ayant une unité de contrôle et de commande activable et dans lequel les appareils de communication ayant une unité de contrôle et de commande activable choisissent, à l'aide d'une valeur caractéristique de priorité, qui leur est associée respectivement, entre eux pour le sous-réseau respectif, un appareil de communication, dont l'unité de contrôle et de commande est activée, tandis que les autres appareils de communication désactivent, au sein du sous-réseau respectif, leur unité de contrôle et de commande.

3. Procédé suivant l'une des revendications 1 ou 2,
dans lequel l'identificateur de sous-réseau respectif est inséré dans les premiers messages de test, par l'appareil de communication choisi respectif, à unité de contrôle et de commande activée.

4. Procédé suivant l'une des revendications 1 à 3,
dans lequel l'identificateur de sous-réseau respectif est ajouté, par les appareils de communication, à des messages, par des modifications de l'état de la liaison sur l'un de leurs accès et/ou par des modification de topologie, qui sont détectées.

5. Procédé suivant l'une des revendications 1 à 4,
dans lequel l'appareil de communication choisi respectif, à unité de contrôle et de commande activée, supprime, entre ses accès d'anneau, un acheminement de premiers messages de test associés à son sous-réseau.

6. Procédé suivant l'une des revendications 1 à 5,
dans lequel l'appareil de communication choisi respectif, à unité de contrôle et de commande activée, divise, à la réception d'un message associé à son sous-réseau, au moins par deux, par des modifications de l'état de liaison, un intervalle de temps pour l'envoi de premiers messages de test.

7. Procédé suivant la revendication 6,
dans lequel l'appareil de communication choisi respectif, à unité de contrôle et de commande activée, rejette, par des modifications d'état de liaison, des messages associés à un sous-réseau étranger.

8. Procédé suivant l'une des revendications 1 à 7,
dans lequel les appareils de communication effacent, à la réception d'un message associé à leur sous-réseau respectif, respectivement leur forwarding database local par des modifications de topologie.

9. Procédé suivant l'une des revendications 1 à 8,
dans lequel les appareils de communication de couplage participent chacun à la réception de premiers messages de test associés à un sous-réseau étranger, sur leur accès de couplage respectif, au choix de l'appareil de communication de couplage, à unité de commande de couplage activée.

10. Procédé suivant l'une des revendications 1 à 9,
dans lequel l'identificateur de couplage est adjoint aux deuxièmes et aux troisièmes messages de test par les appareil de communication de couplage.

11. Procédé suivant la revendication 10,
dans lequel les deux premiers appareils de communication de couplage exploitent, pour la détection de l'interruption entre les deux premiers appareils de communication de couplage, seulement les deuxièmes messages de test, tandis que les deux deuxièmes appareils de communication de couplage exploitent, pour la détection d'une interruption entre les deux deuxièmes appareils de communication de couplage, seulement les troisièmes messages de test.

12. Appareil (411, 412, 421, 422) de communication de couplage pour effectuer un procédé de transmission de messages dans un réseau de communication industriel pouvant fonctionner de manière redondante, qui comprend au moins un premier et un deuxième sous-réseaux, qui comprennent chacun des appareils de communication reliés entre eux dans une topologie en anneau, suivant l'une des revendications 1 à 11, dans lequel
- l'appareil de communication de couplage est conformé et conçu pour transmettre des messages suivant média redundancy protocol,
- l'appareil de communication de couplage a au moins un élément de couplage ainsi qu'un premier et un deuxième accès d'anneau et un accès de couplage, le premier et le deuxième accès d'anneau et l'accès de couplage pouvant être reliés entre eux de manière commutable par l'élément de couplage,
**caractérisé en ce que**
- l'appareil de communication de couplage est conformé et conçu pour, sur la base d'une adresse MAC d'une appareil de communication choisi pour une activation de son unité de contrôle et de commande, déterminer un identificateur de sous-réseau de son sous-réseau,
- l'appareil de communication de couplage est conformé et conçu pour, sur la base des identificateurs de sous-réseau de son sous-réseau et d'un sous-réseau étranger, déterminer un identificateur de couplage pour un couplage de sous-réseau,
- l'appareil de communication de couplage est conformé et conçu pour choisir, avec d'autres appareils de communication de couplage, à l'aide d'une valeur caractéristique de priorité, qui leur est associée respectivement, entre eux, un appareil de communication de couplage, dont l'unité de commande de couplage est activée, tandis que les autres appareils de communication de couplage désactivent leur unité de commande de couplage, seuls des appareils de communication de couplage, ayant un identificateur de couplage associé identique, étant inclus dans un choix de l'appareil de communication de couplage, à unité de commande de couplage activée,
- l'appareil de communication de couplage est conformé et conçu pour échanger, avec un appareil de communication de couplage associé d'un sous réseau étranger, des messages de test pour détecter une interruption entre deux appareils de communication de couplage,
- l'appareil de communication de couplage est conformé et conçu pour, lorsqu'une unité de commande de couplage est activée, commander un acheminement de messages ayant des données utiles, de et/ou vers l'accès de couplage, en fonction de la détection d'une interruption entre des appareils de communication de couplage associés à un couplage de sous-réseau.

13. Appareil de communication de couplage suivant la revendication 12,
dans lequel l'appareil de communication de couplage comprend un switch ou un bridge.
